# EUROPEAN PATENT APPLICATION

(11) **EP 1 323 847 A2**
(43) Date of publication of application: **02.07.2003**
(21) Application number: 02445180.9
(22) Date of filing: 17.12.2002
(51) Int. Cl.: C23C 30/00

(54) **Coated cemented carbide body and method for use**

(30) Priority: 28.12.2001 US 342758 P
(71) Applicant: SECO TOOLS AB, S-737 82 Fagersta (SE)
(72) Inventor: Ruppi, Sakari, 737 44 Fagersta (SE); Sandberg, Anna, 737 43 Fagersta (SE); Laitila, Edward, 737 47 Fagersta (SE)
(74) Representative: Taquist, Lennart

(57) **Abstract**

A coated sintered cemented carbide body includes a cemented carbide body, a first layer adjacent the cemented carbide body, the first layer including Ti(C,N) and having a thickness of from about 3 to about 20 µm, an alumina layer adjacent said first layer, the alumina layer including α-Al₂O₃ or κ-Al₂O₃ and having a thickness of from about 1 to about 15 µm, and a further layer adjacent the aluminum layer of a carbide, carbonitride or carboxynitride of one or more of Ti, Zr and Hf, the further layer having a thickness of from about 1 to 15 µm. A friction-reducing layer, including one or more of γ-Al₂O₃, κ-Al₂O₃ and nanocrystalline Ti(C,N) and having a thickness of from about 1 to about 5 µm, can be adjacent to the further layer. A method to cut steel with a sintered cemented carbide body where the alumina is α-Al₂O₃ and a method to cut cast iron with a sintered cemented carbide body where the alumina is α-Al₂O₃.

## Description

### BACKGROUND

### FIELD OF THE INVENTION

The present application relates generally to coatings. More specifically, the present application relates to multilayer coatings including an alumina layer.

### BACKGROUND OF THE INVENTION

In the discussion of the state of the art that follows, reference is made to certain structures and/or methods. However, the following references should not be construed as an admission that these structures and/or methods constitute prior art. Applicant expressly reserves the right to demonstrate that such structures and/or methods do not qualify as prior art against the present invention.

From U.S. Patent 6,221,469, it appears that the use of a κ-Al₂O₃ coated metal cutting insert is better than an α-Al₂O₃ coated cutting insert, particularly where high-speed turning is concerned. However, it has been found that in interrupted turning and in turning with coolant, the α-Al₂O₃ coated insert performs better. This appears to be so because between the α- and κ-forms, the α form is more ductile.

κ-Al₂O₃ cannot deform plastically due to its defect structure. When the application temperature is lower, e.g., with coolant, κ-Al₂O₃ cannot transform to α-Al₂O₃ either. On the other hand, the temperature and especially the pressure are obviously high enough to activate sufficient amount of slip systems in the α-Al₂O₃ phase. Consequently, the insert containing the κ-Al₂O₃ is more brittle due lack of plasticity during cutting.

### SUMMARY OF THE INVENTION

It is an object of this invention to avoid or alleviate the problems of the prior art.

It is further an object of this invention to provide a particularly efficacious coated cemented carbide body for the cutting of steel or cast iron.

An exemplary embodiment of a coated sintered cemented carbide body comprises a cemented carbide body, a first layer adjacent the cemented carbide body, the first layer including Ti(C,N) and having a thickness of from about 3 to about 20 µm, an alumina layer adjacent said first layer, the alumina layer including α-Al₂O₃ or κ-Al₂O₃ and having a thickness of from about 1 to about 15 µm, and a further layer adjacent the aluminum layer of a carbide, carbonitride or carboxynitride of one or more of Ti, Zr and Hf, the further layer having a thickness of from about 1 to 15 µm.

In an exemplary embodiment of a coated sintered cemented carbide body, a friction-reducing layer is adjacent to the further layer, the friction-reducing layer including one or more of γ-Al₂O₃, κ-Al₂O₃ and nanocrystalline Ti(C,N). The friction-reducing layer has a thickness of from about 1 to about 5 µm.

In one aspect, the coated sintered cemented carbide body, in which the Al₂O₃ is α-Al₂O₃, can be used to cut cast iron.

In another aspect, the coated sintered cemented carbide body, in which the Al₂O₃ layer is α-Al₂O₃, can be used for the cutting of steel.

### BRIEF DESCRIPTION OF THE DRAWING FIGURES

The objects and advantages of the invention will become apparent from the following detailed description of preferred embodiments thereof in connection with the accompanying drawings in which like numerals designate like elements and in which:
FIG. 1 shows a graph of tool life vs. cutting speed in logarithmic form for each of α-Al₂O₃, κ-Al₂O₃, and Ti(C,N). FIG. 1(a) shows crater wear and FIG. 1(b) shows flank wear.
FIG. 2 is a representation of the cutting insert of the present invention.
FIG. 3 is a representation of another aspect of the present invention.
FIG. 4 is a representation of another aspect of the present invention.
FIG. 5 shows the chipping results from inserts made according to the present invention.
FIG. 6 shows the chipping results from inserts made according to the present invention.
FIG. 7 shows the chipping results from inserts made according to the present invention.

### DETAILED DESCRIPTION OF PREFERRED EMBODIMENTS

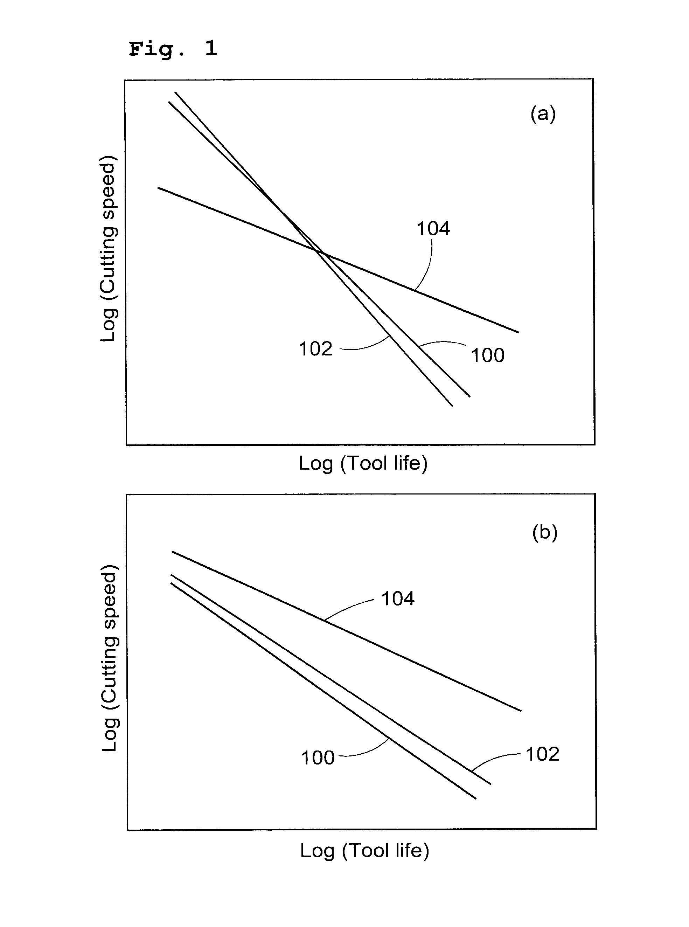

It has earlier been found (see, for example, U.S. Patent 5,137,774) that α-Al₂O₃ is a better coating on cemented carbide inserts for cutting of cast iron while a κ-Al₂O₃ coating on a cemented carbide insert has been considered being equal or better in applications involving the cutting of steel. FIG. 1 shows a graph of tool life vs. cutting speed in logarithmic form for each of α-Al₂O₃, κ-Al₂O₃, and Ti(C,N). FIG. 1(a) shows crater wear. The results for α-Al₂O₃ (labeled as 100), κ-Al₂O₃ (labeled as 102) and Ti(C,N) (labeled as 104) intersect at a cutting speed of approximately 350 m/minute. FIG. 1(b) shows flank wear. From FIG. 1(b), the tool life for each of α-Al₂O₃ 100, κ-Al₂O₃ 102 and Ti(C,N) 104 increases with decreasing tool speed, with the flank wear tool life for any one cutting speed increasing between α-Al₂O₃ 100 and κ-Al₂O₃ 102, and between κ-Al₂O₃ 102 and Ti(C,N) 104. From FIG. 1, it appears that the wear properties of α-Al₂O₃ and κ-Al₂O₃ in steel are very similar. However, it has been surprisingly found that in those applications demanding toughness, much better edge strength can be obtained by substituting for the κ layer a layer of α as an intermediate layer. It further appears that the differences between α-Al₂O₃ and κ-Al₂O₃ are emphasized when the Al₂O₃ is applied in a multilayer structure and where a relatively thick Ti(C,N) layer overlies the Al₂O₃ layer.

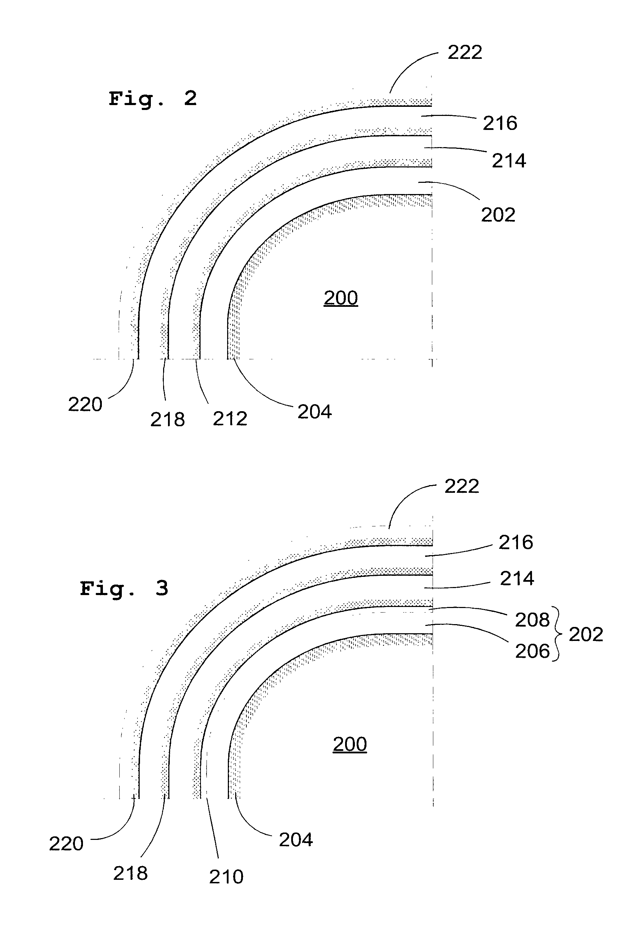

As shown in FIG. 2, a particular aspect of the present invention, there is shown a cemented carbide body 200 upon which there is applied a layer 202 of Ti(C,N) having a thickness of from about 3 to about 20 µm, preferably from about 5 to about 15 µm. If desired, an optional TiN bonding layer 204 having a thickness of from about 0.5 to about 2 µm, preferably from about 0.5 to about 1 µm, may be applied between the cemented carbide and the Ti(C,N) layer 202.

The Ti(C,N) layer 202 can be made of Ti(C,N) applied by CVD (Chemical Vapor Deposition), MTCVD (Medium Temperature Chemical Vapor Deposition) processes, or combinations thereof. In a particularly preferred embodiment, the Ti(C,N) layer 202 comprises a first portion 206 adjacent the cemented carbide body 200 of columnar Ti(C,N) and a second outer portion 208 of equiaxed Ti(C,N) (see FIG. 3). In this instance, the first portion 206 comprises from about 5 to 95%, preferably from about 10 to about 80%, of the total thickness of the Ti(C,N) layer 202. In an exemplary embodiment, the first portion 206 and the second outer portion 208 are produced in accordance with and correspond in width, length and grain size with the columnar/equiaxed layer of U.S. Patent 6,221,469, the entire contents of which are hereby incorporated by reference.

In another exemplary embodiment, the layer 202 of Ti(C,N) comprises a multilayer of MTCVD Ti(C,N) which may also contain at least one layer 210 of TiN and/or TiC interspersed between the multilayers of Ti(C,N).

Above the Ti(C,N) layer 202 is a bonding layer 212. The bonding layer 212 can promote adhesion and phase control of a subsequently applied alumina layer. For, example, the bonding layer 212 can include (TiAl)(CO) having a thickness of from about 0.5 to about 2 µm, preferably from about 0.5 to about 1 µm, to improve the adhesion and secure phase control of the Al₂O₃ which is applied thereafter.

The Al₂O₃ layer 214 may be a single layer of α- or κ-, or the Al₂O₃ layer 214 may comprise a multilayer of said Al₂O₃ phases. The κ-Al₂O₃ may be applied as a multilayer according to the teachings of U.S. Patent 5,700,569, the entire contents of which are hereby incorporated by reference. The α-Al₂O₃ may be applied according to known techniques.

Atop the Al₂O₃ layer 214 is another layer 216 of from about 1 to about 15 µm, preferably from about 2 to about 6 µm, thickness of a carbide, nitride, carbonitride, or carboxynitride of Ti, Zr, Hf, or multilayers thereof. Preferably, this layer 216 is an MTCVD Ti(C,N) or Ti(C,O,N). In a particular embodiment, this layer 216 may also comprise a laminated multilayer having from about 4 to about 150 layers of Ti(C,N), each having a thickness of from about 0.05 to about 1 µm.

A bonding layer 218 of (TiAl)(CO) having a thickness of from about 0.5 to about 2 µm can be disposed between the Al₂O₃ layer 214 and this layer 216.

Atop the layer 216 may be provided a friction-reducing layer 220 of nanocrystalline Ti(C,N), γ- Al₂O₃ or κ-Al₂O₃. The nanocrystalline Ti(C,N) may be applied according to the teachings of U.S. Patent 6,472,060, the entire contents of which are hereby incorporated by reference. This friction-reducing layer 220 helps reduce the friction in cutting between the Ti(C,N) and the metal surface to be cut. The thickness of this friction-reducing layer 220 is from about 1 to about 5 µm, preferably from about 2 to about 4 µm.

If desired, a layer of TiN, which imparts in thin form a characteristically gold-colored coating, may be applied as the outermost layer 222 of the coated cemented carbide 200. This optional layer of TiN has a thickness of from 0.5 to 2 µm, preferably from about 0.1 to about 1 µm.

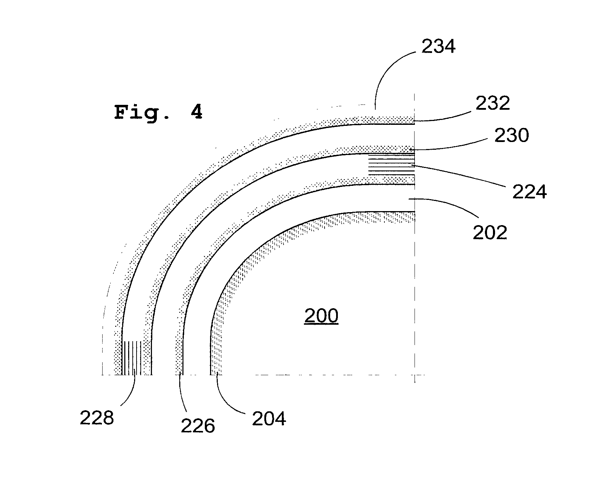

In FIG. 4 there is shown a exemplary embodiment of the present invention in which the cemented carbide body 200 is coated first with the Ti(C,N) layer 202 with the optional bonding layer 204 as discussed above. A laminated alumina multilayer 224 of α- Al₂O₃ and κ-Al₂O₃ is applied onto the Ti(C,N) layer 202 with a bonding layer 226 there between. The alumina multilayer 224 of α-Al₂O₃ and κ-Al₂O₃ may comprise from about 4 up to about 150 layers of each phase of the alumina with the κ-Al₂O₃ being deposited according to the techniques shown in U.S. Patent 5,700,569 and the α-Al₂O₃ in accordance with conventional techniques. Each multilayer has a thickness of from about 0.05 to about 1 µm.

Atop the alumina multilayer 224 is a multilayer 228 which may comprise either multilayers of Ti(C,N) alone or layers of Ti(C,N) interspersed with one or more layers of carbide, nitride, carbonitride, or carboxynitride of Ti, Zr, Hf, or Al₂O₃. For example, the multilayer can include layers of Ti(C,N) - TiC, Ti(C,N) - TiN, Ti(C,N) - κ-Al₂O₃, Ti(C,N) - α-Al₂O₃, Ti(C,N) - Ti(C,O,N), Ti(C,N) - Zr(C,N), Ti(C,N) - Hf(C,N), and combinations thereof. There may be between 4 and 150 layers within this multilayer 228. Multilayer 228 has a thickness of from about 1 to about 15 µm, preferably from about 2 to about 6 µm. A bonding layer 230, which has a total thickness for from about 0.1 to about 1 µm, may be disposed between the alumina multilayer 224 and multilayer 228, e.g., between the alumina multilayer and the multilayer of Ti(C,N). Atop the multilayer 228 of Ti(C,N) is a friction-reducing layer 232 and an optional TiN layer 234. In an exemplary embodiment, the friction-reducing layer 232 and the TiN layer 234 can be as discussed above in regard to FIG. 2 with respect to friction-reducing layer 220 and TiN layer 222.

In one preferred embodiment, which is especially applicable for applications demanding extreme toughness, the coating thickness is as follows: The first Ti(C,N) based layer is from 4 to 10, preferably 7 µm, the alumina layer is from 4 to 10, preferably about 7 µm, and the uppermost Ti(C,N) layer is from 2 to 6 µm, preferably about 4 µm. The total coating thickness is of the order of 15 - 25 µm.

The invention is additionally illustrated in connection with the following examples, which are to be considered as illustrative of the present invention. It should be understood, however, that the invention is not limited to the specific details of the examples.

### Example 1: Two identical multicoatings according to this invention were tested. The only difference between the coating layers was the phase composition of the Al₂O₃ layer. The coatings are specified in detail below:

| Coating No. 1 | Coating No. 2 |
|---|---|
| Ti(C,N), 7 µm (thickness) | Ti(C,N), 7 µm (thickness) |
| κ-Al₂O₃, 7 µm (thickness) | α-Al₂O₃, 7 µm (thickness) |
| Ti(C,N), 4 µm (thickness) | Ti(C,N), 4 µm (thickness) |

The coatings were compared in interrupted turning coolant under the following conditions:
Cutting Speed, Vc=300 m/minute
Feed, f=0.4 mm/v
Work piece material: SS1672
Operation: intermittent turning with coolant

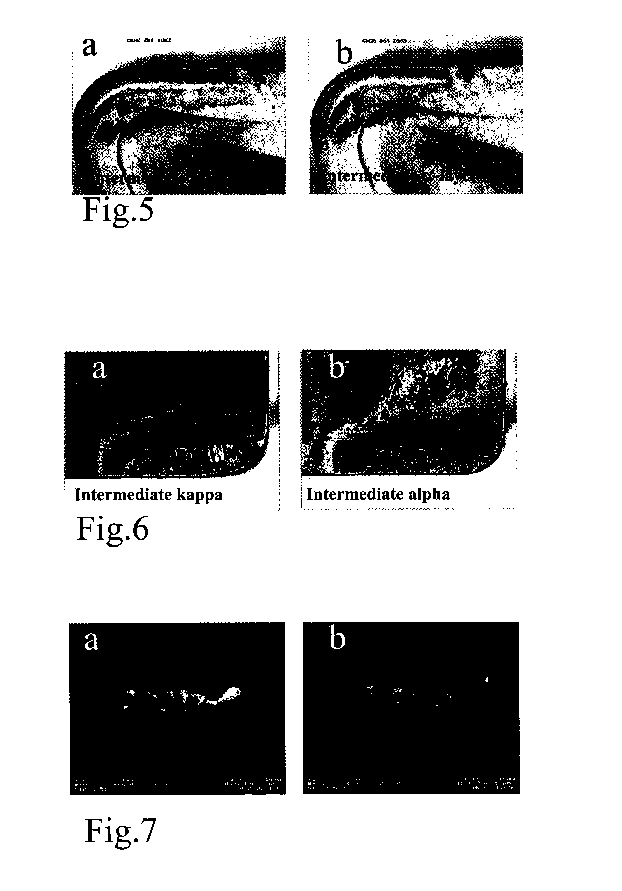

FIG. 5(a) shows Coating No. 1 and FIG. 5(b) show Coating No. 2 from Example 1. As is clear from FIGS. 5(a) and (b), the coating with α-Al₂O₃ exhibited much less chipping.

### Example 2: The same coatings were tested in cast iron under the following conditions:

Cutting speed, Vc=400 m/minute
Depth of cut, ap=2.5 mm
Feed, f=0.4 mm/v
Work piece material: SS0130, cast iron

FIG. 6 shows the cutting edges for Coating No. 1 (FIG. 6(a)) and Coating No. 2 (FIG. 6(b)) after 2 minutes of turning under the conditions specified in Example 2. In the presence of a relatively thick carbonitride layer atop the Al₂O₃ layer, the differences between the phases became very clear, with Coating No. 2, e.g., the α-Al₂O₃ coating, clearly outperformed Coating No. 1, e.g., the κ-Al₂O₃ coating.

### Example 3: Coatings No. 1 and Coating No. 2 were tested at lower cutting speed under the following conditions:

Cutting speed, Vc=250 m/minute
Depth of cut, ap=2.5 mm
Feed, f=0.4 mm/v
Work piece material: SS0130, cast iron

FIG. 7(a) and FIG. 7(b) show edge shipping results for Coatings No. 1 and Coating No. 2, respectively. From FIGS. 7(a) and 7(b), it appears that Coating No. 2 exhibits much less edge chipping at lower cutting speeds than Coating No. 1.

### Example 4: The coatings from Example 1 were tested under the same conditions, but without coolant. The edge strength of the coating was expressed in terms of chipped edge line as percent of the edge line in contact with the workpiece material. The results of this test are shown in Table 1.

**TABLE 1 -**

| Edge Strength of Coating | | |
|---|---|---|
| Coating | Edge Chipping (%) | Lifetime (minutes) |
| Coating No. 1: Ti(C,N)- κ-Al₂O₃-Ti(C,N) | 26 | 12 |
| Coating No. 2: Ti(C,N)- α-Al₂O₃-Ti(C,N) | 8 | 15 |

Although the present invention has been described in connection with preferred embodiments thereof, it will be appreciated by those skilled in the art that additions, deletions, modifications, and substitutions not specifically described may be made without department from the spirit and scope of the invention as defined in the appended claims.

## Claims

1. A coated sintered cemented carbide body, comprising:
a cemented carbide body;
a first layer adjacent the cemented carbide body, the first layer including Ti(C,N) and having a thickness of from about 3 to about 20 µm;
an alumina layer adjacent said first layer, the alumina layer including α-Al₂O₃ or κ-Al₂O₃ and having a thickness of from about 1 to about 15 µm;
a further layer adjacent the aluminum layer of a carbide, carbonitride or carboxynitride of one or more of Ti, Zr and Hf, the further layer having a thickness of from about 1 to 15 µm.

2. The coated cemented carbide body of claim 1, comprising:
a friction-reducing layer adjacent to the further layer, the friction-reducing layer including one or more of γ-Al₂O₃, κ-Al₂O₃ and nanocrystalline Ti(C,N),
wherein the friction-reducing layer has a thickness of from about 1 to about 5 µm.

3. The coated cemented carbide body of claim 1, comprising:
a bonding layer of TiN between the cemented carbide body and the first layer.

4. The coated cemented carbide body of claim 3, wherein the bonding layer has a thickness of from about 0.5 to about 2 µm.

5. The coated cemented carbide body of claim 1, wherein the Ti(C,N) of the first layer includes CVD Ti(C,N), MTCVD Ti(C,N) or combinations thereof.

6. The coated cemented carbide body of claim 5, wherein the first layer includes a first portion adjacent the cemented carbide body of columnar Ti(C,N) and a second portion of equiaxed Ti(C,N).

7. The coated cemented carbide body of claim 6, comprising a layer of TiN between the first portion and the second portion.

8. The coated cemented carbide body of claim 1, wherein the first layer includes a multilayer of MTCVD Ti(C,N), TiN and TiC.

9. The coated cemented carbide body of claim 1, wherein the alumina layer is α-Al₂O₃.

10. The coated cemented carbide body of claim 1, wherein the alumina layer is κ-Al₂O₃.

11. The coated cemented carbide body of claim 1, wherein the alumina layer includes a multilayer of from about 4 to about 150 layers of alumina.

12. The coated cemented carbide body of claim 11, wherein each layer of the multilayer has a thickness of from about 0.05 to about 1.0 µm.

13. The coated cemented carbide body of claim 1, wherein the first layer includes a multilayer of from about 4 to about 150 layers of Ti(C,N).

14. The coated cemented carbide body of claim 13, wherein each layer of the multilayer has a thickness of from about 0.05 to about 1.0 µm.

15. The coated cemented carbide body of claim 13, wherein the multilayer of Ti(C,N) comprises multilayers of Ti(C,N) interspersed with multilayers of one or more of Al₂O₃ and a carbide, nitride, carbonitride or carboxynitride of Ti, Zr, and Hf.

16. The coated cemented carbide body of claim 15, wherein each layer of the multilayer has a thickness of from about 0.05 to about 1.0 µm.

17. The coated cemented carbide body of claim 1, comprising a layer of TiN disposed atop the further layer, the layer of TiN having a thickness of from about 0.5 to 2 µm.

18. The coated cemented carbide body of claim 1, wherein the first layer has a thickness of from 5 to 10 µm.

19. The coated cemented carbide body of claim 1, wherein the alumina layer has a thickness of from 5 to 10 µm.

20. The coated cemented carbide body of claim 1, wherein the further layer has a thickness of from 2 to 5 µm.

21. A method of cutting cast iron comprising using the insert of claim 9.

22. A method of cutting steel comprising using the insert of claim 9.

23. A method of cutting steel comprising using the insert of claim 10.

24. A method of cutting steel comprising using the insert of claim 11.
